# EUROPÄISCHE PATENTSCHRIFT

(11) **EP 4 003 049 B1**
(45) Veröffentlichungstag und Bekanntmachung des Hinweises auf die Patenterteilung: **13.12.2023**
(21) Anmeldenummer: 20734918.4
(22) Anmeldetag: 25.06.2020
(51) Int. Cl.: A23K 50/70, A23K 20/105, A23K 20/142, A23K 50/75

(54) **VERFAHREN ZUR FÜTTERUNG VON GEFLÜGEL**
METHOD FOR FEEDING POULTRY
PROCÉDÉ D'ALIMENTATION DE VOLAILLE

(30) Priorität: 26.07.2019 DE 102019120246
(43) Veröffentlichungstag der Anmeldung: 01.06.2022
(73) Patentinhaber: Alzchem Trostberg GmbH, 83308 Trostberg (DE)
(72) Erfinder: HAMMER, Benedikt, 83308 Trostberg (DE); GREGER, Stefan, 06886 Wittenberg (DE)
(74) Vertreter: Weickmann & Weickmann PartmbB
(86) Internationale Anmeldenummer: PCT/EP2020/067848
(87) Internationale Veröffentlichungsnummer: WO 2021/018487

(56) Entgegenhaltungen:
- EP-A1- 1 909 601
- WO-A1-2015/121084
- MILAN VRANES ET AL: "Experimental and computational study of guanidinoacetic acid self-aggregation in aqueous solution", FOOD CHEMISTRY, Bd. 237, 1. Dezember 2017 (2017-12-01), Seiten 53-57, XP055726092, NL ISSN: 0308-8146, DOI: 10.1016/j.foodchem.2017.05.088
- YOUNG J F ET AL: "METABOLISM AND NUTRITION WATER-HOLDING CAPACITY IN CHICKEN BREAST MUSCLE IS ENHANCED BY PYRUVATE AND REDUCED BY CREATINE SUPPLEMENTS", POULTRY SCIENCE, OXFORD UNIVERSITY PRESS, OXFORD, Bd. 83, Nr. 3, 1. März 2004 (2004-03-01), Seiten 400-405, XP008053678, ISSN: 0032-5791
- H. M. EDWARDS ET AL: "Studies on Arginine Deficiency in Chicks", THE JOURNAL OF NUTRITION, Bd. 64, Nr. 2, 1. Februar 1958 (1958-02-01), Seiten 271-279, XP055728461, US ISSN: 0022-3166, DOI: 10.1093/jn/64.2.271
- DAVID H BAKER: "Advances in protein-amino acid nutrition of poultry", AMINO ACIDS ; THE FORUM FOR AMINO ACID AND PROTEIN RESEARCH, SPRINGER-VERLAG, VI, Bd. 37, Nr. 1, 14. November 2008 (2008-11-14), Seiten 29-41, XP019723342, ISSN: 1438-2199

## Beschreibung

Die vorliegende Erfindung betrifft ein Verfahren zur Fütterung von Geflügel während der Aufzucht, während der Haltung oder in der Mast des Geflügels, in dem Guanidinoessigsäure oder ein Salz hiervon als Futtermittelzusatz verabreicht wird.

Guanidinoessigsäure (CAS-Nr. 352-97-6, Summenformel C₃H₇N₃O₂ - nachfolgend auch GAA genannt), auch als Glycocyamin, N-Amidinoglycin oder N-(Aminoiminomethyl)-glycin bekannt, ist seit einiger Zeit auf dem Markt erhältlich und ist in der Geflügelmast als Futtermittelzusatz zugelassen. Vielfältige Studien haben unter anderem gezeigt, dass der Einsatz von Guanidinoessigsäure während der Aufzucht, während der Haltung oder in der Mast des Geflügels eine Futtermittelersparnis, eine Verbesserung der Futteraufnahme und/oder eine Steigerung der Mastleistung bewirkt.

So werden mit den europäischen Patenten EP 1758463 B1, EP 1853248 B1, EP 1909601 B1, EP 1991065 B1 und EP 2170098 B1 Futtermittelzusätze auf Basis von Guanidinoessigsäure sowie Guanidinoessigsäure als Futtermittelzusatz beschrieben.

J.F. Young et al., "Metabolism and Nutrition Water-Holding Capacity in Chicken Breast Muscle Is Enhanced by Pyruvate and Reduced by Creatine Supplements", Poultry Science, Oxford University Press, Oxford, Bd. 83, Nr. 3, Seiten 400-405 beschreibt den Einsatz von Kreatin und Pyruvat als Futtermittelzusatz bei der Mast von Hühnern. M. Vranes et al., "Experimental and computational study of guanidinoacetic acid self-aggregation in aqueous solution" Food Chemistry, Bd. 237 (2017), Seiten 53-57 beschreibt experimentelle Untersuchungen sowie computergestützte Untersuchungen zur Selbst-Aggregation von Guanidinoessigsäure in wässrigen Lösungen.

In der Anwendung der Guanidinoessigsäure, beispielsweise als Futtermittelzusatz für Broiler, wird die Guanidinoessigsäure in einer Menge von 600 mg/ kg Futter eingesetzt. Dabei wird die Guanidinoessigsäure als Feststoff bzw. Feststoffzusammensetzung dem zu verabreichenden Futter beigemengt. In der Praxis hat sich dabei herausgestellt, dass eine zielgerichtete Verwendung des Wirkstoffes aufgrund der einzusetzenden, relativ geringen Menge an Wirkstoff ein effektives Homogenisieren der Futterzusammensetzung voraussetzt. Diese Homogenisierungsverfahren werden in der Praxis jedoch als zu kostenintensiv oder teilweise sogar als ineffizient betrachtet.

Der vorliegenden Erfindung liegt die Aufgabe zugrunde, ein Verfahren zur Fütterung von Geflügel bereitzustellen, das einfach, sicher und verlässlich die Verabreichung von Guanidinoessigsäure als Futtermittelzusatz für Geflügel ermöglicht und gleichzeitig ein aufwändiges Mischen und Homogenisieren der Guanidinoessigsäure mit einem Futter vermeidet. Dabei soll weiterhin der volle Nutzen der zu verabreichenden Guanidinoessigsäure während der Aufzucht, während der Haltung oder in der Mast des Geflügels zur Anwendung gebracht werden.

Gelöst werden diese Aufgaben durch ein Verfahren gemäß Anspruch 1. Bevorzugte Ausführungsformen der Erfindung sind in den Unteransprüchen angegeben, die wahlweise miteinander kombiniert werden können.

Somit ist gemäß einer ersten Ausführung ein Verfahren zur Fütterung von Geflügel während der Aufzucht, während der Haltung oder in der Mast des Geflügels Gegenstand der vorliegenden Erfindung, das die Verfahrensschritte umfasst,
a. Bereitstellung einer Futterzusammensetzung, und
b. Bereitstellen einer wässrigen Lösung umfassend mindestens einen Futtermittelzusatz,
wobei die Futterzusammensetzung und die wässrige Lösung jeweils ad-libitum für die Ernährung des Geflügels bereitgestellt werden, und wobei die Lösung Guanidinoessigsäure und/oder ein Salz hiervon als Futtermittelzusatz umfasst, und die Lösung eine Konzentration von Guanidinoessigsäure in Wasser von 50 bis 1200 mg/l aufweist.

Somit kann ein Verfahren zur Fütterung von Geflügel bereitgestellt werden, indem auf ein aufwändiges Mischen und Homogenisieren einer Futterzusammensetzung mit der zu verabreichenden Guanidinoessigsäure als Futtermittelzusatz verzichtet wird. Somit kann insbesondere auch ein Verfahren zur Verfügung gestellt werden, in dem die zu verabreichende Menge an Guanidinoessigsäure unabhängig von einer Futterzusammensetzung eingestellt werden kann. Dies sind wertvolle Vorteile bei der Verabreichung von Guanidinoessigsäure, da bereits vergleichsweise geringe Mengenunterschiede einen Einfluss auf die Wirksamkeit als Futtermittelzusatz haben. Das bereitgestellte Verfahren kann somit als einfach in der Anwendung sowie sicher und verlässlich in der Handhabung bezeichnet werden.

Erfindungswesentlich wird die Futterzusammensetzung als auch die wässrige Lösung *ad libitum* für die Ernährung des Geflügels bereitgestellt. Im Zusammenhang mit der vorliegenden Erfindung soll dabei unter dem Begriff *ad libitum* eine Menge an Futterzusammensetzung und eine Menge an wässriger Lösung verstanden sein, die den täglichen Bedarf an Futter und an Wasser für die Ernährung jedes einzelnen Individuums, das betrachtet wird, oder bezogen auf die Gesamtheit an Individuen, die betrachtet werden, den täglichen Bedarf für die Ernährung der Gesamtheit der Individuen übersteigt. Somit soll gemäß der vorliegenden Erfindung die Futterzusammensetzung und die wässrige Lösung *ad libitum,* nämlich im Überschuss zur freien Verwendung des Geflügels bereitgestellt werden.

Somit unterscheidet sich die erfindungsgemäße Verabreichung der Guanidinoessigsäure deutlich von einer spezifischen Verabreichung eines Wirkstoffes, der beispielsweise täglich in Form einer definierten Menge von 500 mg pro Tag in Einzeldosen und unabhängig von weiteren Nahrungs- oder Lebensmitteln verabreicht wird. Umso überraschender ist es, dass die alleinige Bereitstellung von Guanidinoessigsäure oder einem Salz hiervon *ad libitum,* nämlich zur freien Verfügung des Geflügels, in der wässrigen Lösung in einer Menge von 50 bis 1200 mg/ l Wasser zu dem erwünschten Erfolg, nämlich einer Futtermittelersparnis führt.

Die Konzentration der Guanidinoessigsäure in der wässrigen Lösung wurde erfindungsgemäß auf eine sehr niedrige Konzentration begrenzt ausgewählt, da somit ermöglicht wird, dass das Geflügel gleichzeitig eine für den üblichen Lebensbedarf oder die Mast des Geflügels notwendige Menge an Wasser, eine für den üblichen Lebensbedarf oder die Mast des Geflügels notwendige Menge an Futterzusammensetzung und gleichzeitig eine bedarfsgerechte Menge an Guanidinoessigsäure aufnehmen kann. Hierbei ist zu beachten, dass die Futterzusammensetzung und die wässrige Lösung *ad libitum* bereitgestellt werden und dass das Geflügel das bereitgestellte Wasser bzw. die wässrige Lösung sowie die bilanzierte Futterzusammensetzung aus eigenem Antrieb aufnimmt.

Insgesamt war jedoch nicht vorhersehbar, dass die vorgegebene Konzentration und Menge an Lösung zu dem gewünschten Nutzen führt, insbesondere da dem Geflügel die Guanidinoessigsäure und die Futterzusammensetzung in zwei verschiedenen Darreichungsformen angeboten wird. Vollkommen überraschend ist, dass mit der erfindungsgemäßen Menge und der erfindungsgemäßen Konzentration der Lösung eine Futtermittelersparnis realisiert werden kann.

Erfindungsgemäß umfasst die bereitgestellte wässrige Lösung Guanidinoessigsäure und/ oder ein Salz hiervon, wobei die Lösung eine Konzentration von Guanidinoessigsäure in Wasser von 50 bis 1200 mg/l aufweist. Die Konzentration der wässrigen Lösung kann jedoch in Abhängigkeit von der Größe, des Alters und/oder des Gewichtes des Geflügels variiert werden. Bevorzugt weist die Lösung eine Konzentration von Guanidinoessigsäure in Wasser von mindestens 50 mg/ l, weiter bevorzugt von mindestens 100 mg/ l auf, und gleichzeitig oder unabhängig hiervon weiter bevorzugt von höchstens 1200 mg/ l, weiter bevorzugt höchstens 1000 mg/ l, weiterbevorzugt von höchstens 800 mg/ l, weiter bevorzugt von höchstens 600 mg/ l, besonders bevorzugt von höchstens 500 mg/ l, besonders bevorzugt von höchstens 400 mg/ l und ganz besonders bevorzugt von höchstens 300 mg/ l auf.

Bevorzugt weist die Lösung eine Konzentration von Guanidinoessigsäure in Wasser von 100 bis 800 mg/ l, besonders bevorzugt von 100 bis 500 mg/ l, und ganz besonders bevorzugt von 100 bis 300 mg/ l auf.

Dabei ist weiter bevorzugt vorgesehen, dass die Bereitstellung der Futterzusammensetzung und der wässrigen Lösung separat voneinander erfolgt. Besonders bevorzugt ist vorgesehen, dass die wässrige Lösung in Glocken-Automaten bereitgestellt wird und/oder dass die Futterzusammensetzung in offenen Futtertrögen bereitgestellt wird.

Mit der Durchführung der Untersuchung zur Wirksamkeit von wässrigen Lösungen umfassend Guanidinoessigsäure und/ oder ein Salz hiervon in der Mast von Broilern hat sich gezeigt, dass eine deutliche Realisierung der Futtermittelersparnis erreicht wird, wenn die Bereitstellung der Futterzusammensetzung und der wässrigen Lösung räumlich getrennt voneinander erfolgt. Unter räumlich getrennter Bereitstellung ist gemäß der vorliegenden Erfindung zu verstehen, dass die Futterzusammensetzung in einem ersten Raum und die wässrige Lösung in einem von dem ersten Raum getrennten zweiten Raum, der mittels einem für das Geflügel passierbaren Durchgang mit dem ersten Raum verbunden ist. So kann beispielsweise die Futterzusammensetzung in einem Freilauf für das Geflügel bereitgestellt werden und die wässrige Lösung in einer Futterhalle oder umgekehrt. Eine räumlich getrennte Bereitstellung gemäß der vorliegenden Erfindung kann jedoch auch realisiert werden, wenn die Futterzusammensetzung in einem ersten Bereich eines Raumes und die wässrige Lösung in einem von dem ersten Bereich distanzierten zweiten Bereich desselben Raumes bereitgestellt wird. Wesentlich in Bezug auf die räumlich getrennte Bereitstellung ist, dass eine ausreichende Distanz zwischen der Bereitstellungsstelle für die Futterzusammensetzung und der Bereitstellungsstelle für die wässrige Lösung liegt. Bevorzugt ist hierbei als ausreichende Distanz eine Distanz zwischen der Bereitstellungsstelle für die Futterzusammensetzung und der Bereitstellungsstelle für die wässrige Lösung von mehr als 2 m, insbesondere mehr als 6 m und besonders bevorzugt von mehr als 10 m und unabhängig oder gleichzeitig hiervon von höchstens 100 m.

Dabei ist besonders bevorzugt vorgesehen, dass die wässrige Lösung in Glocken-Automaten bereitgestellt wird und/oder dass die Futterzusammensetzung in offenen Futtertrögen bereitgestellt wird.

Ganz besonders bevorzugt ist dabei vorgesehen, dass die wässrige Lösung und/oder die Futterzusammensetzung täglich frisch bereitgestellt werden.

Es hat sich gezeigt, dass frisch bereitgestellte wässrige Lösungen und/ oder frisch bereitgestellte Futterzusammensetzungen von dem Geflügel bereitwillig und ohne Zögern als Nahrungsmittelquellen angenommen werden. Hierbei haben sich wässrige Lösungen als bevorzugt gezeigt, die Wasser aus der Gruppe Trinkwasser, Quellwasser, Brunnenwasser oder Leitungswasser umfassen.

Besonders bevorzugt kann das erfindungsgemäße Verfahren zur Fütterung von Geflügel, insbesondere Geflügel ausgewählt aus der Gruppe Enten, Gänse, Hühner, Hähnchen, Legehennen, Broiler, Truthähne, Wachteln, Strauße und Puten, durchgeführt werden.

Mit den durchgeführten Untersuchungen und der Auswertung ihrer Ergebnisse hat sich gezeigt, dass das erfindungsgemäße Verfahren nicht auf die Verwendung der Guanidinoessigsäure als solche beschränkt ist. Vielmehr hat sich gezeigt, dass in dem Verfahren sowohl Guanidinoessigsäure als solche als auch ein Salz der Guanidinoessigsäure sowie auch Guanidinoessigsäure als solche und ein Salz der Guanidinoessigsäure eingesetzt werden kann. Besonders bevorzugt kann dabei als Salz ein Salz ausgewählt aus der Gruppe der Alkali- oder Erdalkalisalze der Guanidinoessigsäure eingesetzt werden. Ganz besonders bevorzugt können hierbei Natrium-Guanidinoacetat, Kalium-Guanidinoacetat, Magnesium-Guanidinoacetat oder Calcium-Guanidinoacetat, eingesetzt werden.

Weiterhin hat sich mit den der Erfindung zugrundeliegenden Untersuchungen gezeigt, dass die eingesetzte Futterzusammensetzung einen definierten Brennwert haben sollte. Einerseits sollte die Futterzusammensetzung einen für die normale Ernährung und gesundes Wachstum festgelegten Brennwert nicht unterschreiten und andererseits auch nicht überschreiten, um eine Fettleibigkeit zu vermeiden. So haben sich gute Ergebnisse gezeigt, wenn die Futterzusammensetzung einen Brennwert von 8 bis 20 MJ pro 1 kg Futterzusammensetzung, insbesondere von 10 bis 15 MJ pro 1 kg Futterzusammensetzung aufweist, und/ oder die Futterzusammensetzung eine bilanzierte Futterzusammensetzung ist, und/ oder die Futterzusammensetzung eine Futterzusammensetzung gemäß Animal Nutrition Handbook, 3rd Revision, 2014 Section 12, Poultry Nutrition and Feeding ist.

Besonders bevorzugt ist eine bilanzierte Futterzusammensetzung, die eine Futterzusammensetzung gemäß Animal Nutrition Handbook, 3rd Revision, 2014 Section 12, Poultry Nutrition and Feeding ist.

Gleichzeitig oder unabhängig hiervon kann das Verfahren besonders bevorzugt ausgeführt werden, wenn die Futterzusammensetzung mindestens ein Getreide, ein Getreidemehl, ein Getreideschrot oder ein Extrakt hieraus, umfasst. Weiterhin bevorzugt ist hierbei ein Verfahren in dem die Futterzusammensetzung mindestens ein Getreide, ein Getreidemehl, ein Getreideschrot oder ein Extrakt hieraus umfasst, und das Getreide, das Getreidemehl, der Getreideschrot oder ein Extrakt hieraus ausgewählt wird aus mindestens einer der Gruppen a. bis e., nämlich:
a. Mais, Maismehl, Maisschrot oder ein Extrakt hieraus,
b. Hirse, Hirsemehl, Hirseschrot oder ein Extrakt hieraus,
c. Soja, Sojamehl, Sojaschrot oder ein Extrakt hieraus,
d. Weizen, Weizenmehl, Weizenschrot oder ein Extrakt hieraus, und/oder
e. Gerste, Gerstenmehl, Gerstenschrot oder ein Extrakt hieraus.

Weiterhin kann das Verfahren besonders bevorzugt ausgeführt werden, wenn die Futterzusammensetzung mindestens einen weiteren Futtermittelzusatz, insbesondere einen weiteren Futtermittelzusatz aus der Gruppe der Mineralstoffe, Aminosäuren und Vitamine umfasst. Ganz besonders bevorzugt kann dabei dieser Futtermittelzusatz ausgewählt werden aus der Gruppe Calciumcarbonat, Mono- oder Dicalciumphosphat, Lysin, Methionin, Threonin, Thryptophan, Valin, Arginin und Vitamine sowie Mischungen davon.

In einer besonders bevorzugten Ausführungsform wird eine Futterzusammensetzung verwendet, welche selbst keinen Gehalt an Guanidinoessigsäure aufweist. In dieser besonders bevorzugten Ausführungsform wird Guanidinoessigsäure ausschließlich als Futtermittelzusatz in der wässrigen Lösung bereitgestellt.

Eine bevorzugte Futterzusammensetzung, die insbesondere als Pre-Starter-Futter verwendet werden kann, umfasst:
50 bis 65 Gew.%, insbesondere 55 bis 60 Gew.% Mais,
20 bis 45 Gew.%, insbesondere 23 bis 27 Gew.% Pflanzenöl,
25 bis 40 Gew.%, insbesondere 35 bis 40 Gew.% Soja (DOC 45%),
3,0 bis 4,5 Gew.%, insbesondere 3,5 bis 4,0 Gew.% Salz (Natriumchlorid),
14 bis 18 Gew.%, insbesondere 15 bis 17 Gew.% Dicalciumphosphat,
10 bis 12 Gew.%, insbesondere 11,0 bis 11,8 Gew.% Calciumcarbonat,
2,0 bis 3,0 Gew.%, insbesondere 2,6 bis 3,0 Gew.% DL-Methionin,
1,0 bis 2,5 Gew.%, insbesondere 2,0 bis 2,2 Gew.% L-Lysin HCl,
0,30 bis 0,40 Gew.%, insbesondere 0,30 bis 0,35 Gew.% L-Threonin,
0,00 bis 0,03 Gew.%, insbesondere 0,01 bis 0,02 Gew.% L-Tryptophan,
0,5 bis 1,5 Gew.%, insbesondere 0,9 bis 1,1 Gew.% Cholinchlorid, 60% feed grade,
0,5 bis 1,5 Gew.%, insbesondere 0,9 bis 1,1 Gew.% Na-Ca-AI-Silikat (Toxin-Binder),
0,5 bis 1,5 Gew.%, insbesondere 0,9 bis 1,1 Gew.% Mineralstoff Premix,
0,40 bis 0,60 Gew.%, insbesondere 0,45 bis 0,55 Gew.% Coccidiostat (Dinitro-o-toluamid),
0,40 bis 0,60 Gew.%, insbesondere 0,45 bis 0,55 Gew.% Bacitracin Methylene Disalicylat, sowie
0,40 bis 0,60 Gew.%, insbesondere 0,45 bis 0,55 Gew.% Vitamin Premix.

Eine bevorzugte Futterzusammensetzung, die insbesondere als Starter Futter verwendet werden kann, umfasst:
50 bis 65 Gew.%, insbesondere 58 bis 62 Gew.% Mais,
20 bis 45 Gew.%, insbesondere 35 bis 40 Gew.% Pflanzenöl,
25 bis 40 Gew.%, insbesondere 30 bis 35 Gew.% Soja (DOC 45%),
3,0 bis 4,5 Gew.%, insbesondere 3,5 bis 4,0 Gew.% Salz (Natriumchlorid),
14 bis 18 Gew.%, insbesondere 16,5 bis 17,5 Gew.% Dicalciumphosphat,
10 bis 12 Gew.%, insbesondere 11,0 bis 11,8 Gew.% Calciumcarbonat,
2,0 bis 3,0 Gew.%, insbesondere 2,3 bis 2,7 Gew.% DL-Methionin,
1,0 bis 2,5 Gew.%, insbesondere 1,9 bis 2,1 Gew.% L-Lysin HCl,
0,30 bis 0,40 Gew.%, insbesondere 0,32 bis 0,37 Gew.% L-Threonin,
0,00 bis 0,03 Gew.%, insbesondere 0,00 Gew.% L-Tryptophan,
0,5 bis 1,5 Gew.%, insbesondere 0,9 bis 1,1 Gew.% Cholinchlorid, 60% feed grade,
0,5 bis 1,5 Gew.%, insbesondere 0,9 bis 1,1 Gew.% Na-Ca-AI-Silikat (Toxin-Binder),
0,5 bis 1,5 Gew.%, insbesondere 0,9 bis 1,1 Gew.% Mineralstoff Premix,
0,40 bis 0,60 Gew.%, insbesondere 0,45 bis 0,55 Gew.% Coccidiostat (Dinitro-o-toluamid),
0,40 bis 0,60 Gew.%, insbesondere 0,45 bis 0,55 Gew.% Bacitracin Methylene Disalicylat, sowie
0,40 bis 0,60 Gew.%, insbesondere 0,45 bis 0,55 Gew.% Vitamin Premix.

Eine weitere bevorzugte Futterzusammensetzung, die insbesondere als Finisher Futter verwendet werden kann, umfasst:
50 bis 65 Gew.%, insbesondere 61 bis 64 Gew.% Mais,
20 bis 45 Gew.%, insbesondere 38 bis 42 Gew.% Pflanzenöl,
25 bis 40 Gew.%, insbesondere 27 bis 31 Gew.% Soja (DOC 45%),
3,0 bis 4,5 Gew.%, insbesondere 3,5 bis 4,0 Gew.% Salz (Natriumchlorid),
14 bis 18 Gew.%, insbesondere 14,5 bis 16,5 Gew.% Dicalciumphosphat,
10 bis 12 Gew.%, insbesondere 10,5 bis 11,5 Gew.% Calciumcarbonat,
2,0 bis 3,0 Gew.%, insbesondere 2,0 bis 2,5 Gew.% DL-Methionin,
1,0 bis 2,5 Gew.%, insbesondere 1,0 bis 1,5 Gew.% L-Lysin HCl,
0,30 bis 0,40 Gew.%, insbesondere 0,34 bis 0,38 Gew.% L-Threonin,
0,00 bis 0,03 Gew.%, insbesondere 0,00 Gew.% L-Tryptophan,
0,5 bis 1,5 Gew.%, insbesondere 0,9 bis 1,1 Gew.% Cholinchlorid, 60% feed grade,
0,5 bis 1,5 Gew.%, insbesondere 0,9 bis 1,1 Gew.% Na-Ca-AI-Silikat (Toxin-Binder),
0,5 bis 1,5 Gew.%, insbesondere 0,9 bis 1,1 Gew.% Mineralstoff Premix,
0,40 bis 0,60 Gew.%, insbesondere 0,45 bis 0,55 Gew.% Coccidiostat (Dinitro-o-toluamid),
0,40 bis 0,60 Gew.%, insbesondere 0,45 bis 0,55 Gew.% Bacitracin Methylene Disalicylat, sowie
0,40 bis 0,60 Gew.%, insbesondere 0,45 bis 0,55 Gew.% Vitamin Premix.

Die nachfolgenden Beispiele sollen die vorliegende Erfindung veranschaulichen.

### Beispiele

483 Ein-Tages-Küken (Typ Cobb 400, männlich) werden in 21 Einheiten (replicates) a 23 Küken verteilt. Als Futter wird das vom Lieferanten für Cobb 400-Küken empfohlene Futter (gemäß Tabelle 1a und 1b) verwendet, wobei 3 Wachstumsphasen (Pre-Starter: Lebensalter 1 bis 14 Tage; Starter: Lebensalter 15 bis 28 Tage; Finisher: Lebensalter 29 bis 42 Tage) unterschieden werden.

**Tabelle 1a: Zusammensetzung des Futters (abhängig vom Lebensalter**

| **Bestandteil** | **Pre-Starter** | **Starter** | **Finisher** |
|---|---|---|---|
| | **g** | **g** | **g** |
| Mais | 568,1 | 591,8 | 630,8 |
| Pflanzenöl | 25,5 | 38,1 | 40,1 |
| Soja (DOC 45%) | 365,4 | 329,1 | 290,7 |
| Salz (Natriumchlorid) | 3,718 | 3,715 | 3,705 |
| Dicalciumphosphat | 16,434 | 16,914 | 15,587 |
| Calciumcarbonat | 11,483 | 11,479 | 11,164 |
| DL-Methionin | 2,823 | 2,478 | 2,221 |
| L-Lysin HCl | 2,118 | 1,977 | 1,333 |
| L-Threonin | 0,328 | 0,348 | 0,360 |
| L-Tryptophan | 0,016 | 0,000 | 0,000 |
| Cholinchlorid, 60% feed grade | 1,000 | 1,000 | 1,000 |
| Na-Ca-Al-Silikat (Toxin-Binder) | 1,000 | 1,000 | 1,000 |
| Mineralstoff Premix | 1,000 | 1,000 | 1,000 |
| Coccidiostat (Dinitro-o-toluamid) | 0,500 | 0,500 | 0,500 |
| Bacitracin Methylene Disalicylat | 0,500 | 0,500 | 0,500 |
| Vitamin Premix | 0,500 | 0,500 | 0,500 |

**Tabelle 1b: Nährstoff-Zusammensetzung des Futters**

| **Nährstoff-Bestandteil** | **Pre-Starter** | **Starter** | **Finisher** |
|---|---|---|---|
| Energie (MJ/ kg) | 12,56 | 12,98 | 13,19 |
| Proteine (%) | 22 | 21 | 19 |
| Dig. Lysin (%) | 1,250 | 1,150 | 1.000 |
| Dig. Methionin (%) | 0,570 | 0,520 | 0.480 |
| Calcium (%) | 0,850 | 0,850 | 0.800 |
| verfügbarer Phosphor (%) | 0,430 | 0,430 | 0.400 |
| Natrium (%) | 0,160 | 0,160 | 0.160 |
| Dig. Tryptophan (%) | 0,220 | 0,201 | 0.184 |
| Dig. Threonin (%) | 0,770 | 0,720 | 0.670 |

Das Futter wurde in Schrotform (mash) *ad libitum* gegeben, während des Versuches wurde das Futter kühl und trocken gelagert.

Das Wasser bzw. die wässrige Lösung der Guanidinoessigsäure in Wasser wurde über Glockentränken ebenfalls *ad libitum* angeboten.

Zur besseren Vergleichbarkeit wurden Vergleichsversuch A und die folgenden zwei erfindungsgemäßen Versuche (B und C) zeitgleich nebeneinander mit dem gleichen Futter und der gleichen Anzahl von Küken durchgeführt. Die Temperatur war während des Versuches zwischen 23 °C (nachts) und 31 °C (tags), die relative Luftfeuchtigkeit zwischen 52 und 86 %. Die gesamte Versuchsdauer betrug 6 Wochen (42 Tage).

Nach der 1. Woche, nach der 4. Woche und nach der 6. Woche (Versuchsende) wurden jeweils pro Einheit (replicate) die Körpergewichte (BWG in g) und die Menge des aufgenommenen Futters (F) in g) bestimmt und daraus die Futterverwertung (FCR feed conversion rate) bestimmt. Je geringer die FCR ist, desto weniger Futter verbraucht das Hähnchen für das Wachstum, desto effizienter ist der Futtereinsatz. Am Versuchsende wurden aus den Versuchsgruppen 20 Hähnchen, die gewichtsmäßig dem Durchschnitt entsprechen, ausgewählt und die Schlachtparameter RTC (ready to cook yield in g) und Brustfleischanteil (in g) bestimmt.

| | |
|---|---|
| Versuch A: | Hier wurde normales Trinkwasser verwendet |
| Versuch B: | Das Trinkwasser enthielt 200 mg/ l Guanidinoessigsäure |
| Versuch C: | Das Trinkwasser enthielt 267 mg/ l Guanidinoessigsäure |

Das Trinkwasser, das GAA enthielt, wurde täglich frisch in Fässern zubereitet und dann in die Glockentränke nach Bedarf überführt; der Verbrauch an Trinkwasser wurde täglich ermittelt, um die Aufnahme an GAA zu ermitteln und ggf. Anpassungen vorzunehmen.

### Ergebnisse:

**Tabelle 2: Gewichtszunahme und Futterverwertung**

| **Versuch** | **GAA** | **Woche 1** | | | **Woche 4** | | | **Woche 6** | | |
|---|---|---|---|---|---|---|---|---|---|---|
| | | BWG, g | Fl, g | FCR | BWG, g | Fl, g | FCR | BWG, g | Fl, g | FCR |
| A | 0 | 144,4 | 155,2 | 1,075 | 1329 | 1922 | 1,446 | 2593 | 4295 | 1,657 |
| B | 200 mg/ l | 143,8 | 152,5 | 1,061 | 1311 | 1886 | 1,439 | 2588 | 4272 | 1,651 |
| C | 267 mg/ l | 145,2 | 152,9 | 1,054 | 1324 | 1905 | 1,439 | 2604 | 4277 | 1,643 |

Die Futterverwertung (FCR) verbessert sich deutlich bei Zugabe von GAA in das Trinkwasser.

### a) Schlachtergebnis

**Tabelle 2: Schlachtgewicht und Brustgewicht**

| **Versuch** | **Konzentration GAA** | **RTC** | **Brustgewicht** |
|---|---|---|---|
| A | 0 | 754 g | 257 g |
| B | 200 mg/ l | 766 g | 263 g |
| C | 267 mg/ l | 787 g | 266 g |

Bei einem vergleichbaren Körpergewicht hat der verwertbare Schlachtkörper einen deutlichen Zuwachs bei Zugabe von GAA in das Trinkwasser, ebenso erhöht sich das Gewicht des preislich höherwertigen Brustfleisches.

## Patentansprüche

1. Verfahren zur Fütterung von Geflügel während der Aufzucht, während der Haltung oder in der Mast des Geflügels umfassend die Verfahrensschritte,
a. Bereitstellung einer Futterzusammensetzung, und
b. Bereitstellen einer wässrigen Lösung umfassend mindestens einen Futtermittelzusatz,
wobei die Futterzusammensetzung und die wässrige Lösung jeweils ad-libitum für die Ernährung des Geflügels bereitgestellt werden,
**dadurch gekennzeichnet, dass** die Lösung Guanidinoessigsäure und/oder ein Salz hiervon als Futtermittelzusatz umfasst, und die Lösung eine Konzentration von Guanidinoessigsäure in Wasser von 50 bis 1200 mg/ l aufweist.

2. Verfahren nach Anspruch 1, **dadurch gekennzeichnet, dass** die Lösung Guanidinoessigsäure eine Konzentration von 100 bis 800 mg/ l Wasser, insbesondere von 100 bis 500 mg/ l Wasser, insbesondere 100 bis 300 mg/ l Wasser aufweist.

3. Verfahren nach Anspruche 1 oder 2, **dadurch gekennzeichnet, dass** die Futterzusammensetzung und die wässrige Lösung separat oder räumlich getrennt voneinander bereitgestellt werden.

4. Verfahren nach mindestens einem der vorhergehenden Ansprüche, **dadurch gekennzeichnet, dass** die wässrige Lösung in Glocken-Automaten bereitgestellt wird und/oder dass die Futterzusammensetzung in offenen Futtertrögen bereitgestellt wird.

5. Verfahren nach mindestens einem der vorhergehenden Ansprüche, **dadurch gekennzeichnet, dass** die Lösung Wasser aus der Gruppe Trinkwasser, Quellwasser, Brunnenwasser oder Leitungswasser umfasst.

6. Verfahren nach mindestens einem der vorhergehenden Ansprüche, **dadurch gekennzeichnet, dass** das Geflügel ausgewählt wird aus der Gruppe Enten, Gänse, Hühner, Hähnchen, Legehennen, Broiler, Truthähne, Wachteln, Strauße und Puten.

7. Verfahren nach mindestens einem der vorgenannten Ansprüche, **dadurch gekennzeichnet, dass** die wässrige Lösung Guanidinoessigsäure und/ oder ein Salz der Guanidinoessigsäure ausgewählt aus der Gruppe der Alkali- oder Erdalkalisalze der Guanidinoessigsäure, insbesondere Natrium-Guanidinoacetat, Kalium-Guanidinoacetat, Magnesium-Guanidinoacetat oder Calcium-Guanidinoacetat, umfasst.

8. Verfahren nach mindestens einem der vorhergehenden Ansprüche, **dadurch gekennzeichnet, dass** die Futterzusammensetzung eine bilanzierte Futterzusammensetzung ist und/ oder die Futterzusammensetzung eine Brennwert von 8 bis 20 MJ pro 1 kg Futterzusammensetzung aufweist und/ oder die Futterzusammensetzung eine Futterzusammensetzung gemäß Animal Nutrition Handbook, 3rd Revision, 2014 Section 12, Poultry Nutrition and Feeding ist.

9. Verfahren nach mindestens einem der vorhergehenden Ansprüche, **dadurch gekennzeichnet, dass** die Futterzusammensetzung mindestens ein Getreide, ein Getreidemehl, ein Getreideschrot oder ein Extrakt hieraus umfasst, insbesondere ausgewählt aus einer der Gruppen a. bis e.,
a. Mais, Maismehl, Maisschrot oder ein Extrakt hieraus,
b. Hirse, Hirsemehl, Hirseschrot oder ein Extrakt hieraus,
c. Soja, Sojamehl, Sojaschrot oder ein Extrakt hieraus,
d. Weizen, Weizenmehl, Weizenschrot oder ein Extrakt hieraus, und/oder
e. Gerste, Gerstenmehl, Gerstenschrot oder ein Extrakt hieraus.

10. Verfahren nach mindestens einem der vorhergehenden Ansprüche, **dadurch gekennzeichnet, dass** die Futterzusammensetzung mindestens einen weiteren Futtermittelzusatz umfasst, insbesondere einen weiteren Futtermittelzusatz aus der Gruppe der Mineralstoffe, Aminosäuren und Vitamine, insbesondere ausgewählt aus der Gruppe Calciumcarbonat, Dicalciumphosphat, Lysin, Methionin, Threonin, Thryptophan, Valin, Arginin und Vitamine sowie Mischungen davon.

## Claims

1. Method for feeding poultry during breeding, keeping or fattening of poultry comprising the method steps,
a. providing a feed composition, and
b. providing an aqueous solution comprising at least one feed additive,
wherein the feed composition and the aqueous solution are each provided ad-libitum for feeding the poultry,
**characterized in that** the solution comprises guanidinoacetic acid and/or a salt thereof as a feed additive, and the solution has a concentration of guanidinoacetic acid in water of from 50 to 1200 mg/l.

2. The method according to claim 1, **characterized in that** the solution of guanidinoacetic acid has a concentration of from 100 to 800 mg/l of water, in particular from 100 to 500 mg/l of water, in particular from 100 to 300 mg/l of water.

3. The method according to claim 1 or 2, **characterized in that** the feed composition and the aqueous solution are provided separately or spatially separated from each other.

4. The method according to at least one of the preceding claims, **characterized in that** the aqueous solution is provided in bell machines and/or that the feed composition is provided in open feed troughs.

5. The method according to at least one of the preceding claims, **characterized in that** the solution comprises water selected from the group consisting of drinking water, spring water, well water or tap water.

6. The method according to at least one of the preceding claims, **characterized in that** the poultry is selected from the group consisting of ducks, geese, hens, chickens, laying hens, broilers, turkeys, quails, ostriches and turkey hens.

7. The method according to at least one of the preceding claims, **characterized in that** the aqueous solution comprises guanidinoacetic acid and/or a salt of guanidinoacetic acid selected from the group of alkaline or alkaline earth salts of guanidinoacetic acid, in particular sodium guanidinoacetate, potassium guanidinoacetate, magnesium guanidinoacetate or calcium guanidinoacetate.

8. The method according to at least one of the preceding claims, **characterized in that** the feed composition is a balanced feed composition and/or the feed composition has a calorific value of 8 to 20 MJ per 1 kg feed composition and/or the feed composition is a feed composition according to Animal Nutrition Handbook, 3rd Revision, 2014 Section 12, Poultry Nutrition and Feeding.

9. The method according to at least one of the preceding claims, **characterized in that** the feed composition comprises at least one grain, a grain flour, a grain meal or an extract thereof, in particular selected from one of the groups a. to e.,
a. corn, corn flour, corn meal or an extract thereof,
b. millet, millet flour, millet meal or an extract thereof,
c. soy, soy flour, soy meal or an extract thereof,
d. wheat, wheat flour, wheat meal or an extract thereof, and/or
e. barley, barley flour, barley meal or an extract thereof.

10. The method according to at least one of the preceding claims, **characterized in that** the feed composition comprises at least one further feed additive, in particular a further feed additive from the group of minerals, amino acids and vitamins, in particular selected from the group of calcium carbonate, dicalcium phosphate, lysine, methionine, threonine, thryptophan, valine, arginine and vitamins and mixtures thereof.

## Revendications

1. Procédé d'alimentation de volailles pendant l'élevage, pendant la détention ou pendant l'engraissement des volailles, comprenant les étapes de procédé,
a. fourniture d'une composition d'alimentation, et
b. fournir une solution aqueuse comprenant au moins un additif alimentaire,
dans lequel la composition d'alimentation et la solution aqueuse sont chacune fournies ad libitum pour l'alimentation de la volaille,
**caractérisé en ce que** la solution comprend de l'acide guanidinoacétique et/ou un sel de celui-ci comme additif alimentaire, et la solution a une concentration d'acide guanidinoacétique dans l'eau de 50 à 1200 mg/l.

2. Procédé selon la revendication 1, **caractérisé en ce que** la solution d'acide guanidinoacétique présente une concentration de 100 à 800 mg/l d'eau, en particulier de 100 à 500 mg/l d'eau, en particulier de 100 à 300 mg/l d'eau.

3. Procédé selon les revendications 1 ou 2,
**caractérisé en ce que** la composition d'alimentation et la solution aqueuse sont fournies séparément ou de manière spatialement séparée.

4. Procédé selon au moins l'une des revendications précédentes,
**caractérisé en ce que** la solution aqueuse est mise à disposition dans des automates à cloche et/ou **en ce que** la composition d'alimentation est mise à disposition dans des auges ouvertes.

5. Procédé selon au moins l'une des revendications précédentes,
**caractérisé en ce que** la solution comprend de l'eau choisie dans le groupe comprenant l'eau potable, l'eau de source, l'eau de puits ou l'eau du robinet.

6. Procédé selon au moins l'une des revendications précédentes,
**caractérisé en ce que** les volailles sont choisies dans le groupe comprenant les canards, les oies, les poulets, les poules, les poules pondeuses, les poulets de chair, les dindons, les cailles, les autruches et les dindes.

7. Procédé selon au moins l'une des revendications précédentes,
**caractérisé en ce que** la solution aqueuse comprend de l'acide guanidinoacétique et/ou un sel de l'acide guanidinoacétique choisi dans le groupe des sels alcalins ou alcalino-terreux de l'acide guanidinoacétique, en particulier le guanidinoacétate de sodium, le guanidinoacétate de potassium, le guanidinoacétate de magnésium ou le guanidinoacétate de calcium.

8. Procédé selon au moins l'une des revendications précédentes,
**caractérisé en ce que** la composition d'alimentation est une composition d'alimentation équilibrée et/ou la composition d'alimentation a une valeur énergétique de 8 à 20 MJ par 1 kg de composition d'alimentation et/ou la composition d'alimentation est une composition d'alimentation selon l'Animal Nutrition Handbook, 3rd Revision, 2014 Section 12, Poultry Nutrition and Feeding.

9. Procédé selon au moins l'une des revendications précédentes,
**caractérisé en ce que** la composition d'alimentation comprend au moins une céréale, une farine de céréale, des céréales concassées ou un extrait de ceux-ci, notamment choisi dans l'un des groupes a. à e.,
a. maïs, farine de maïs, maïs concassé ou un extrait de ceux-ci,
b. millet, farine de millet, du millet concassé ou un extrait de ceux-ci,
c. soja, farine de soja, soja concassé ou un extrait de ceux-ci,
d. blé, farine de blé, blé concassé ou un extrait de ceux-ci, et/ou
e. orge, farine d'orge, de l'orge concassée ou un extrait de ceux-ci.

10. Procédé selon au moins l'une des revendications précédentes,
**caractérisé en ce que** la composition d'alimentation comprend au moins un autre additif alimentaire, en particulier un autre additif alimentaire du groupe des minéraux, des acides aminés et des vitamines, en particulier choisi dans le groupe du carbonate de calcium, du phosphate dicalcique, de la lysine, de la méthionine, de la thréonine, du thryptophane, de la valine, de l'arginine et des vitamines, ainsi que leurs mélanges.
